# FASCICULE DE BREVET EUROPEEN

(11) **EP 1 360 100 B1**
(45) Date de publication et mention de la délivrance du brevet: **30.06.2010**
(21) Numéro de dépôt: 02704796.8
(22) Date de dépôt: 25.01.2002
(51) Int. Cl.: B60T 11/236

(54) **MAITRE-CYLINDRE COMPORTANT UN JOINT D'ETANCHEITE ET DE REALIMENTATION**
HAUPTZYLINDER MIT ERHOLUNGSDICHTUNG
MASTER CYLINDER COMPRISING A FLUID AND REPLENISHING SEAL

(30) Priorité: 09.02.2001 FR 0101897
(43) Date de publication de la demande: 12.11.2003
(73) Titulaire: BOSCH SISTEMAS DE FRENADO, S.L., 08080 Barcelona 6 (ES)
(72) Inventeur: SIMON BACARDIT, Juan, E-08013 Barcelone (ES); BERTHOMIEU, Bruno, Barcelone (ES); SACRISTAN, Fernando, E-08348 Barcelone (ES)
(74) Mandataire: Hurwic, Aleksander Wiktor
(86) Numéro de dépôt international: PCT/FR2002/000324
(87) Numéro de publication internationale: WO 2002/064410

(56) Documents cités:
- EP-A- 0 115 223
- EP-A- 0 159 236
- DE-A- 19 652 486
- US-A- 4 945 728
- US-A- 5 732 557

## Description

L'invention concerne un maître-cylindre de freinage pour un véhicule automobile.

L'invention concerne plus particulièrement un maître-cylindre de freinage pour un véhicule automobile, du type qui comporte un corps sensiblement axial à l'intérieur d'un alésage duquel est monté coulissant au moins un piston axial, qui est susceptible d'être actionné par un conducteur du véhicule entre une position arrière de repos et une position avant d'application d'un effort de freinage, et qui est rappelé élastiquement vers sa position arrière de repos à l'encontre d'une butée formée dans le corps, du type dans lequel l'alésage comporte deux moyens d'étanchéité avant et arrière qui sont interposés entre le piston et l'alésage, le moyen d'étanchéité avant délimitant dans l'alésage une chambre d'alimentation arrière et une chambre de pression avant, du type dans lequel le corps comporte un conduit radial d'alimentation qui relie un réservoir extérieur de fluide hydraulique à la chambre d'alimentation arrière et qui débouche entre les deux moyens d'étanchéité, du type dans lequel le corps comporte un perçage d'alimentation d'un circuit de freinage qui débouche dans la chambre de pression avant, du type qui comporte des moyens de mise en communication de la chambre de pression avant et de la chambre d'alimentation arrière qui sont susceptibles d'être inhibés par le piston lorsqu'il est mû axialement vers l'avant vers sa position d'application pour isoler la chambre de pression avant de la chambre d'alimentation arrière et permettre ainsi l'établissement d'une pression de freinage dans la chambre de pression avant.

On connaît de nombreux exemples de maîtres-cylindre de freinage de ce type. Voir par exemple US 4945728, EP0 115223, DE 19652486 ou EP0 159236.

Dans la plupart des maîtres cylindres de ce type, au moins un des deux moyens d'étanchéité est porté par le piston. Il est donc sujet à une usure importante du fait des mouvements de va-et-vient qu'effectue le piston dans l'alésage du corps du servomoteur au cours des freinages successifs.

Cette usure est susceptible de compromettre l'étanchéité des chambres d'alimentation et de pression du servomoteur, ce qui peut avoir des conséquences d'autant plus graves que la plupart des maîtres cylindres actuels sont conçus pour présenter des sections de piston importantes afin de permettre l'établissement d'une pression de freinage élevée.

Pour remédier à cet inconvénient, l'invention propose un maître-cylindre de freinage du type décrit précédemment, qui comporte au moins un joint d'étanchéité porté par l'alésage du corps.

Dans ce but, l'invention propose un maître-cylindre de freinage du type décrit précédemment, caractérisé en ce que le moyen d'étanchéité avant comporte un joint d'étanchéité avant qui est monté dans une gorge du corps et dont une lèvre périphérique intérieure, agencée au contact du piston, est susceptible de se soulever du piston lorsqu'il revient de sa position d'application vers sa position de repos pour permettre au fluide hydraulique, en circulant entre l'alésage et le piston de ré-alimenter la chambre de pression avant à partir du conduit radial d'alimentation et du réservoir.
- le corps comporte une paire avant de portées annulaires qui sont agencées de part et d'autre du joint d'étanchéité avant pour permettre le guidage du piston dans l'alésage et qui comportent au moins une rainure de circulation du fluide hydraulique,
- les portées annulaires de la paire avant comportent une pluralité de rainures hélicoïdales,

Selon d'autres caractéristiques de l'invention:
- le piston est monobloc, notamment tubulaire, et comporte au moins un conduit dont une première extrémité débouche dans la chambre de pression avant et dont une seconde extrémité débouche dans la périphérie du piston, de manière communiquer avec la chambre d'alimentation en position de repos du piston pour former les moyens de communication, et de manière à communiquer avec la chambre de pression avant en position d'application du piston pour inhiber les moyens de communication,
- le joint comporte un anneau de renfort intérieur qui est destiné à éviter l'extrusion du joint au passage de la seconde extrémité du conduit du piston,
- l'anneau est réalisé en un matériau sensiblement élastique, et il comporte une portée tronconique et une fente axiale agencée sur sa périphérie qui sont destinées à faciliter son montage,
- l'anneau comporte au moins une fente axiale agencée sur la face intérieure de sa périphérie,
- l'anneau est réalisé en un matériau élastomère,
- le piston comporte un tronçon avant et un tronçon arrière tubulaires de même diamètre extérieur, une portée arrière du tronçon avant coulissant dans un alésage du tronçon arrière, et des moyens de retenue et des moyens de sollicitation élastique sont interposés entre une face arrière du tronçon avant et le fond de l'alésage du tronçon arrière,
- le tronçon avant comporte au moins un conduit dont une première extrémité débouche dans la chambre de pression avant et dont une seconde extrémité débouche dans la périphérie de la portée arrière entre une face arrière d'épaulement du tronçon avant et une face avant d'épaulement du tronçon arrière pour former un clapet mobile qui, en position de repos du piston, débouche dans la chambre d'alimentation et constitue les moyens de communication,
- la face avant d'épaulement du tronçon arrière comporte un joint annulaire,
- le moyen d'étanchéité arrière est constitué d'un joint d'étanchéité arrière qui est monté dans une gorge du corps et dont une lèvre périphérique intérieure est agencée au contact du piston,
- le corps comporte une paire arrière de portées annulaires qui sont agencées de part et d'autre du joint d'étanchéité arrière pour permettre le guidage du piston dans l'alésage,
- le piston comporte à son extrémité un anneau élastique extérieur qui est susceptible, dans la position de repos du piston, de venir au contact d'une face d'épaulement avant de la portée annulaire avant de la paire avant de portées annulaires formant butée,
- le piston est rappelé élastiquement vers sa position arrière de repos par un ressort,
- le maître-cylindre est un maître-cylindre de type "tandem" qui comporte, d'arrière en avant, deux pistons primaire et secondaire qui délimitent dans l'alésage du corps des chambres d'alimentation primaire et secondaire et des chambres de pression primaire et secondaire, le piston primaire étant rappelé élastiquement vers sa position arrière de repos par l'intermédiaire d'un ressort prenant appui entre une face arrière du piston secondaire et une face avant du piston primaire.

D'autres caractéristiques et avantages de l'invention apparaîtront à la lecture de la description détaillée qui suit pour la compréhension de laquelle on se reportera aux dessins annexés dans lesquels :
- la figure 1a est une vue en coupe axiale d'un premier mode de réalisation d'un maître-cylindre de type "tandem" selon l'invention représenté en position de repos ;
- la figure 2a est une vue du maître-cylindre de la figure 1a représenté en position d'inhibition des deux moyens de mise en communication ;
- la figure 3a est une vue du maître-cylindre de la figure 1 a représenté en position d'application d'un effort de freinage ;
- la figure 4a est une vue du maître-cylindre de la figure 1 a représenté en position de réalimentation des conduits radiaux d'alimentation et des réservoirs ;
- la figure 5a est une vue en coupe axiale d'un second mode de réalisation d'un maître-cylindre de type "tandem" selon l'invention représenté en position de repos ;
- la figure 6a est une vue du maître-cylindre de la figure 5a représenté en position d'inhibition des deux moyens de mise en communication ;
- la figure 7a est une vue du maître-cylindre de la figure 5a représenté en position d'application d'un effort de freinage ;
- la figure 8a est une vue du maître-cylindre de la figure 5a représenté en position de réalimentation des conduits radiaux d'alimentation et des réservoirs ;

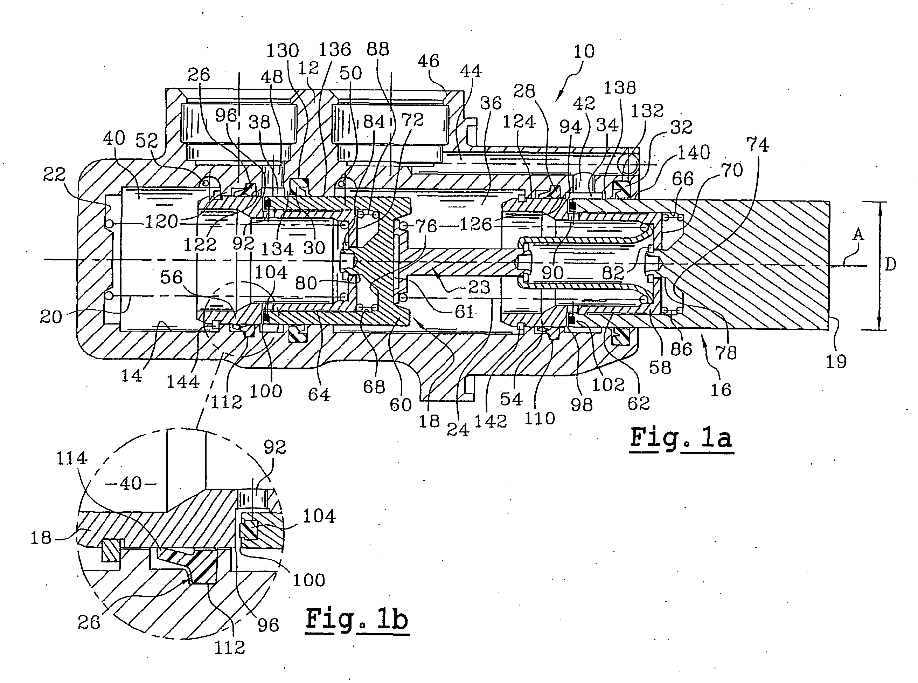

- les figure 1b à 8b sont des vues de détail du joint d'étanchéité avant associé au piston secondaire selon les figures 1a à 8a ;

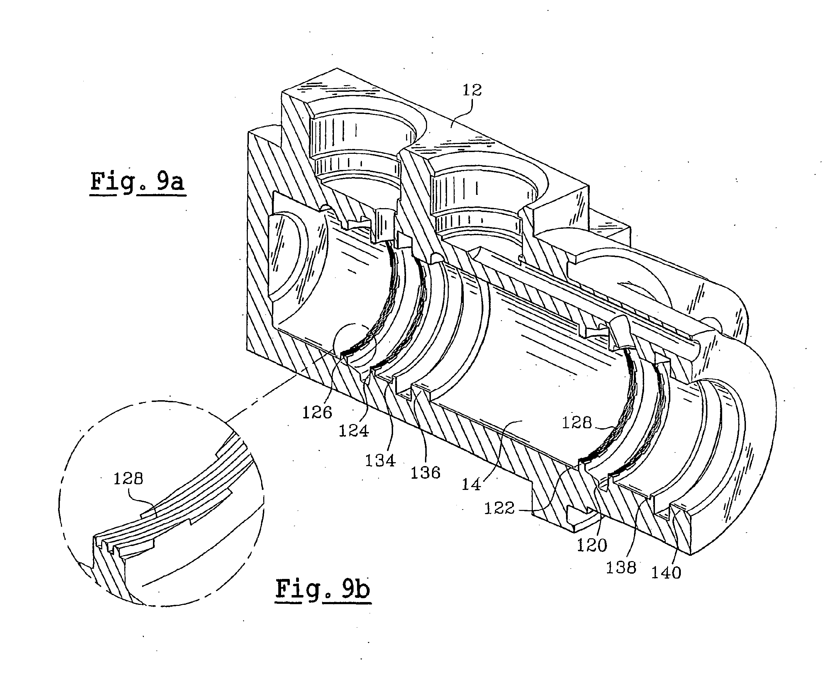

- la figure 9a est une demi-vue en perspective du corps du maître-cylindre ;
- la figure 9b est une vue de détail des rainures hélicoïdales du corps de la figure 1 ;

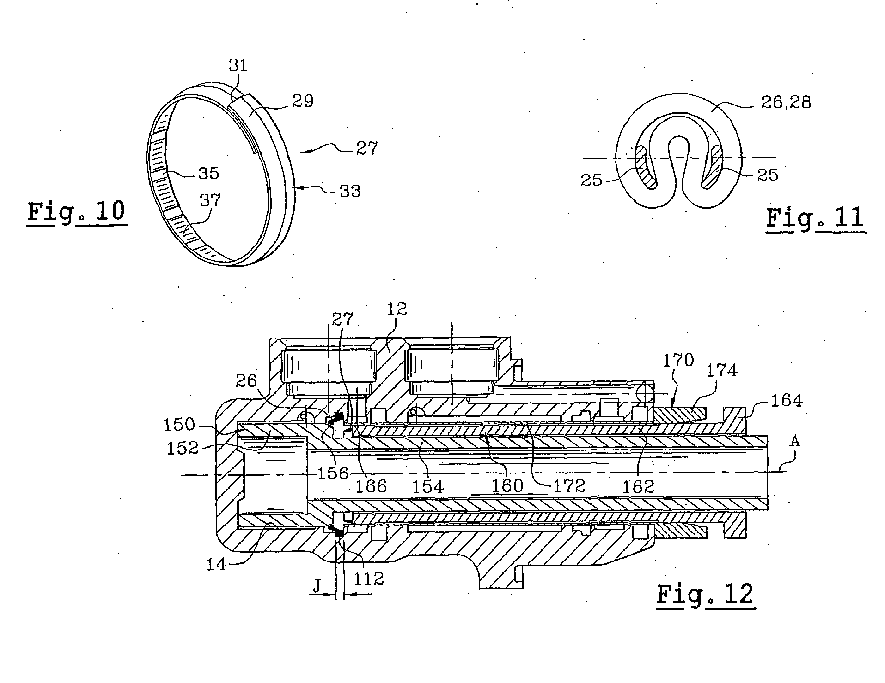

- la figure 10 est une vue en perspective de l'anneau de renfort ;
- la figure 11 est une vue, en bout d'un joint d'étanchéité et de son outil de montage représentés avant le montage du joint; et

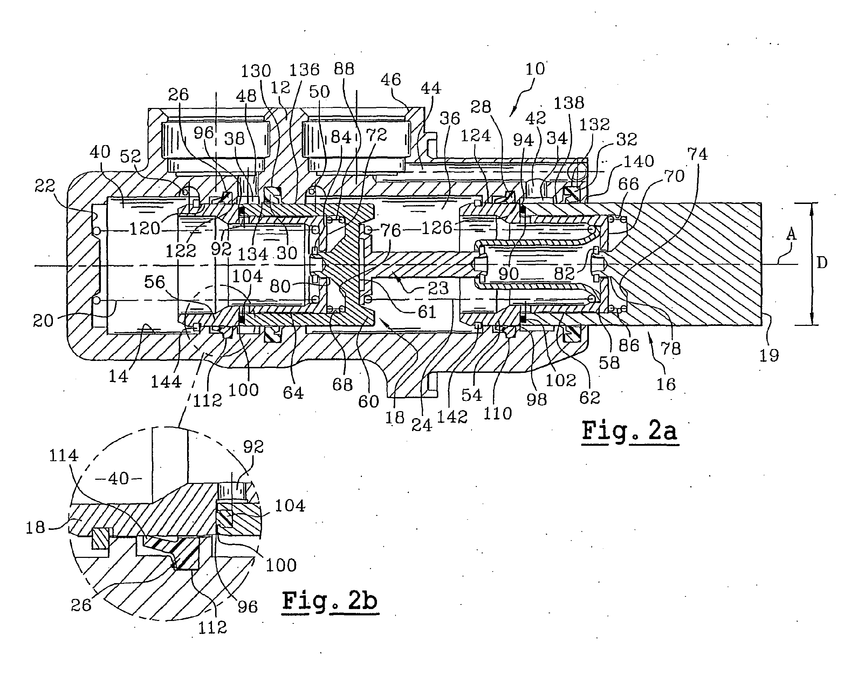

- les figure 12 à 14 sont des vues en coupe axiale illustrant trois étapes successives du montage d'un anneau de renfort du joint d'étanchéité de la figure 2a à l'intérieur de l'alésage du maître-cylindre.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

On a représenté sur les figures 1a à 8a l'ensemble d'un maître-cylindre 10 de freinage pour un véhicule automobile.

De manière connue, dans les modes de réalisation préférés de l'invention, le maître-cylindre 10 est un maître-cylindre de type "tandem" qui comporte un corps 12 sensiblement axial d'axe A à l'intérieur d'un alésage 14 duquel sont montés coulissants deux pistons axiaux 16 et 18.

Cette configuration n'est toutefois pas limitative de l'invention et le maître-cylindre 10 pourrait être un maître-cylindre simple ne comportant qu'un seul piston coulissant.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Le piston primaire 16 est susceptible d'être actionné directement par un conducteur du véhicule. Par exemple, une extrémité arrière 19 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16 d'une façon qui sera décrite plus en détail ultérieurement.

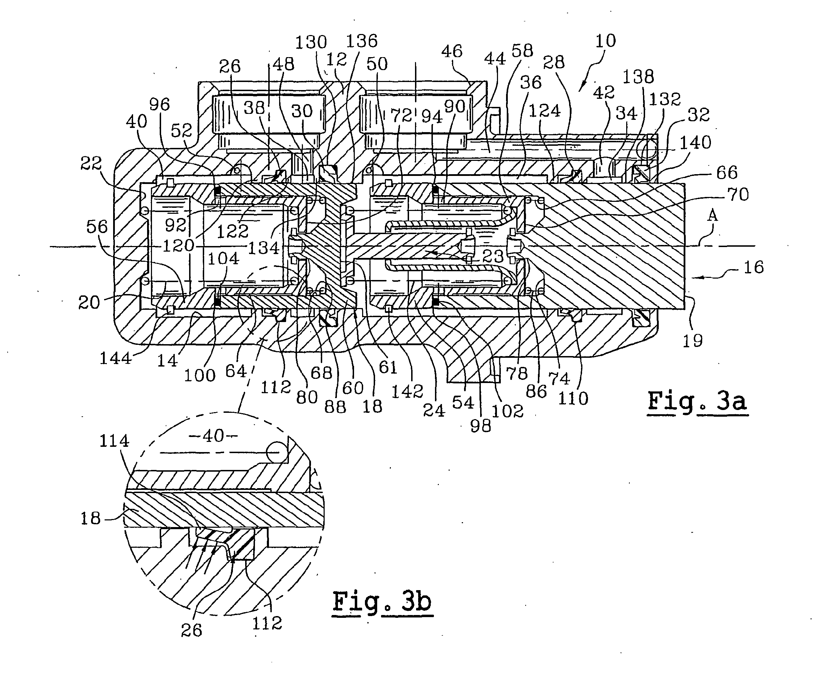

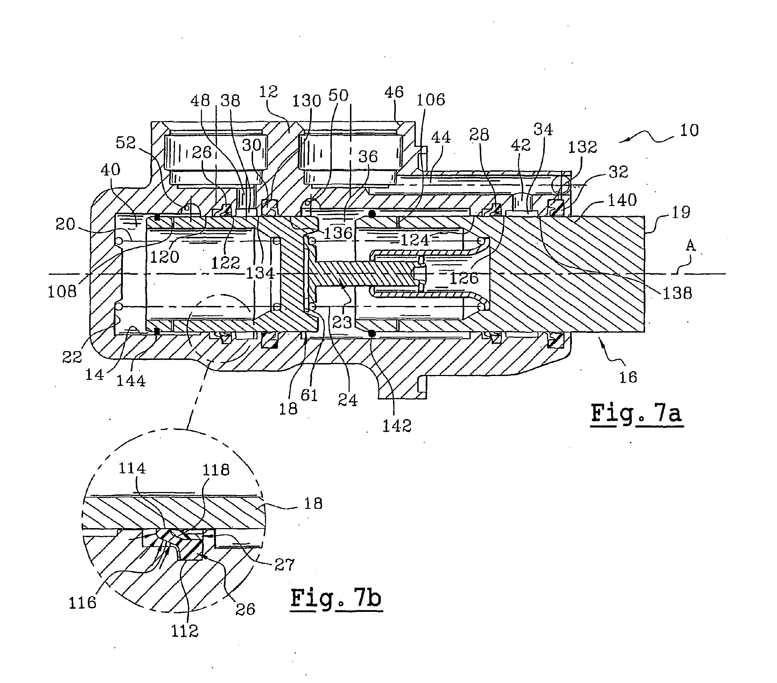

Chaque piston primaire 16 ou secondaire 18 est ainsi mobile entre une position arrière de repos, qui est représentée aux figures 1 a et 5a, et une position avant d'application d'un effort de freinage, qui est représentée aux figures 3a et 7a, en passant par des positions intermédiaires qui seront décrites ultérieurement.

De manière connue, chaque piston primaire 16 ou secondaire 18 est rappelé élastiquement vers sa position arrière de repos à l'encontre d'une butée qui est formée dans le corps 14 et qui sera décrite ultérieurement.

En particulier, le piston secondaire 18 est rappelé vers l'arrière par un ressort 20 qui prend appui sur une face 22 transversale d'extrémité avant de l'alésage 14 et sur le piston secondaire 18, et le piston primaire 16 est rappelé élastiquement vers l'arrière par un ressort 24 qui prend appui sur une face 61 transversale arrière du piston secondaire 18 et sur le piston primaire 16. Plus particulièrement, le ressort 24 étant notamment de grande longueur, il est monté autour d'un vérin coulissant 23 qui est interposé entre la face 61 transversale arrière du piston secondaire 18 et le piston primaire 16.

L'alésage 14 comporte deux moyens primaires d'étanchéité avant 28 et arrière 32 qui sont interposés respectivement entre le piston primaire 16 et l'alésage 14 et deux moyens secondaires d'étanchéité avant 26 et arrière 30 qui sont interposés respectivement entre le piston secondaire 18 et l'alésage 14.

De ce fait, le moyen primaire d'étanchéité avant 28 délimite dans l'alésage 14 une chambre 34 d'alimentation arrière et une chambre 36 de pression avant. De même, le moyen secondaire d'étanchéité avant 26 délimite dans l'alésage 14 une chambre 38 d'alimentation arrière et une chambre 40 de pression avant

Le corps 12 comporte un conduit 42 primaire radial d'alimentation qui relie un réservoir extérieur primaire (non représenté) de fluide hydraulique à la chambre d'alimentation primaire arrière 34 et qui débouche entre les deux moyens primaires d'étanchéité 28 et 32.

En particulier, le conduit 42 primaire radial est par exemple relié par l'intermédiaire d'un conduit longitudinal intermédiaire 44 à un orifice 46 qui débouche à l'extérieur du corps 14 et qui est destiné à recevoir une bouche de sortie (non représentée) du réservoir primaire associé.

Le corps 12 comporte un conduit 48 secondaire radial d'alimentation qui relie un réservoir extérieur secondaire (non représenté) de fluide hydraulique à la chambre d'alimentation secondaire arrière 38 et qui débouche entre les deux moyens secondaires d'étanchéité 26 et 30.

Le corps comporte deux perçages primaire 50 et secondaire 52 d'alimentation des circuits de freinage primaire et secondaires associés qui débouchent dans les chambres avant de pression primaire 36 et secondaire 40 associées.

De manière connue, le maître-cylindre 10 comporte des moyens de mise en communication de chaque chambre avant de pression primaire 36 et secondaire 40 avec la chambre arrière d'alimentation primaire 34 et secondaire 38 associée. Ces moyens de mise en communication sont susceptibles d'être inhibés par le piston primaire 16 et secondaire 18 associé lorsqu'il est mû axialement vers l'avant vers sa position d'application pour isoler la chambre avant de pression primaire 36 ou secondaire 40 de la chambre arrière d'alimentation primaire 34 ou secondaire 38 associée, et permettre ainsi l'établissement d'une pression de freinage dans la chambre avant de pression primaire 36 ou secondaire 40 associée.

Selon un premier mode de réalisation de l'invention qui est décrit aux figures 1a à 4a et 1b à 4b, chaque piston primaire 16 et secondaire 18 comporte un tronçon avant 54, 56 associé et un tronçon arrière 58, 60 associé, tubulaires, de même diamètre extérieur "D", et il comporte une portée arrière 62, 64 du tronçon avant 54, 56 qui coulisse dans un alésage 66, 68 du tronçon arrière 58, 60.

Des moyens de retenue et des moyens de sollicitation élastique sont interposés entre une face arrière 70, 72 de chaque tronçon avant 54, 56 et le fond 74, 76 de l'alésage du tronçon arrière 58, 60.

En particulier, chaque tronçon arrière 58, 60 comporte par exemple une portée 78, 80 cylindrique de guidage qui traverse la paroi associée à la face arrière du tronçon avant associé et dont une extrémité avant comporte un moyen d'arrêt 82, 84 pour former les moyens de retenue.

D'autre part un ressort 86, 88 est interposé entre chaque face arrière 70, 72 de chaque tronçon avant 54, 56 et le fond 74, 76 de l'alésage du tronçon arrière 58, 60.

Comment l'illustrent les figures 1a à 4a, et plus particulièrement les figures 1b à 4b, pour former les moyens de mise en communication des chambres de pression avant et d'alimentation arrière, chaque tronçon avant 54, 56 comporte au moins un conduit 90, 92 dont une première extrémité débouche dans la chambre de pression 36, 40 avant associée et dont une seconde extrémité débouche dans la périphérie de la portée arrière 62, 64 entre une face arrière d'épaulement 94, 96 du tronçon avant et une face avant 98, 100 d'épaulement du tronçon arrière 58, 60 pour former un clapet mobile qui, en position de repos du piston 16, 18, débouche dans la chambre d'alimentation 36, 40 et permet la communication entre les chambres avant 36, 40 et les chambres arrière 34, 38.

Avantageusement, la face avant 98, 100 d'épaulement de chaque tronçon arrière 58, 60 comporte un joint annulaire 102, 104 en matériau élastomère qui permet de fermer ce clapet de manière étanche.

L'avancée de chaque tronçon arrière 58, 60 permet donc de fermer le clapet associé et d'isoler la chambre avant 36, 40 associée, ce qui permet la montée en pression du fluide hydraulique.

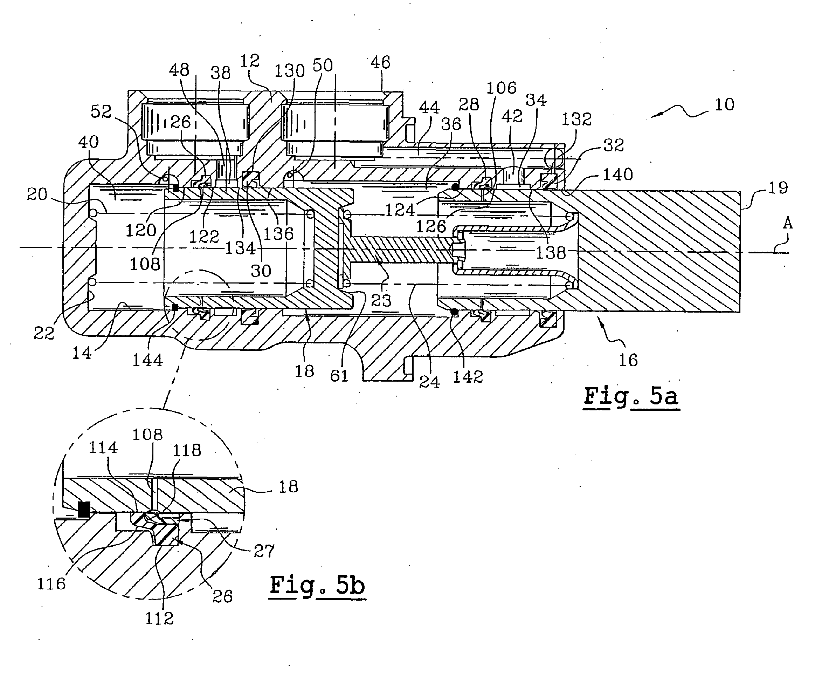

Selon un second mode de réalisation de l'invention qui est décrit aux figures 5a à 8a et 5b à 8b, chaque piston 16, 18 est monobloc et notamment tubulaire. Pour former les moyens de communication, chaque piston 16, 18 comporte au moins un conduit 106, 108 dont une première extrémité débouche dans la chambre de pression avant 36, 40 et dont une seconde extrémité débouche dans la périphérie du piston 16, 18, de manière à communiquer avec la chambre d'alimentation 34, 38 en position de repos du piston 16, 18 et de manière à communiquer avec la chambre de pression avant 36, 40 en position d'application du piston. De la sorte, en position de repos de chaque piston 16, 18, le conduit 106, 108 est agencé axialement au niveau de la chambre d'alimentation arrière 34, 38 et, dans la position avancée du piston 16, 18, qui est représentée plus particulièrement à la figure 7a, le conduit 106, 108 est agencé axialement au niveau de la chambre de pression avant, c'est à dire de l'autre côté du moyen d'étanchéité avant 28, 26 par rapport à la position de repos du piston 16, 18, ce qui permet par conséquent d'isoler la chambre 36, 40 de pression avant associée et ainsi de permettre la montée en pression du fluide hydraulique.

Conformément à l'invention, et quel que soit le mode de réalisation choisi de l'invention, le moyen d'étanchéité avant 28, 26 est comporte un joint d'étanchéité avant 28, 26 qui est monté dans une gorge 110, 112 associée du corps 12. Une lèvre périphérique intérieure du joint d'étanchéité avant 28, 26, agencée au contact du piston 16, 18, est susceptible de se soulever du piston 16, 18 lorsqu'il revient de sa position d'application vers sa position de repos pour permettre au fluide hydraulique, en circulant entre l'alésage 14 et le piston 16, 18 de ré-alimenter la chambre de pression avant 36, 40 à partir du conduit radial 42, 48 d'alimentation et du réservoir.

A titre d'exemple, la lèvre 114 du joint 26 avant d'étanchéité associé au piston secondaire 18 est représentée aux figures 1b à 8b.

Comme l'illustre la figure 11, chaque joint 26, 28 peut être préalablement enroulé sur lui-même, sensiblement selon la forme d'un "haricot" et maintenu dans cette configuration à l'aide d'une pince (non représentée) dont les mors 25 pincent le joint 26, 28.

La pince est ensuite introduite dans l'alésage 14 du corps 10 jusqu'à ce que le joint 26, 28 soit parvenu axialement au niveau de la gorge 110, 112 puis ses mors 25 sont manoeuvrés pour relâcher le joint 26, 28 qui reprend sa forme et se positionne spontanément dans la gorge 110, 112.

Dans le second mode de réalisation qui est représenté aux figures 5a à 8a et 5b à 8b, chaque joint 26, 28 comporte un évidement, qui est agencé en arrière de sa lèvre et qui est destiné a recevoir un anneau 27 de renfort intérieur. Cet anneau 27 de renfort intérieur est destiné à éviter l'extrusion du joint 26, 28, comme on le verra ultérieurement.

L'anneau 27 est représenté plus particulièrement à la figure 10.

Avantageusement, l'anneau est réalisé en un matériau sensiblement élastique, et il comporte une portée tronconique 29 et une fente axiale 31 agencée sur sa périphérie 33 qui sont destinées à faciliter son montage, comme on le verra ultérieurement en référence aux figures 12 à 14.

Avantageusement l'anneau peut comporter des rainures axiales 35 agencées sur la face intérieure 37 de sa périphérie 33.

Avantageusement, dans le mode de réalisation préféré de l'invention, l'anneau 27 est réalisé en un matériau élastomère.

Comme on peut le voir sur les figures 1a et 5a, dans la position de repos de chaque piston, la lèvre du joint avant 26 est au contact de la périphérie du piston 18, et la lèvre du joint avant 28 est au contact de la périphérie du piston 16. Dans cette configuration, les chambres arrières d'alimentation 34, 38 étant en communication avec les chambres avant 36, 40, le joint est soumis à une pression égale sur chacune de ses faces. Les figures 1b et 5b illustrent plus particulièrement le détail de la lèvre 114 du joint avant 26 qui est au contact du piston 18.

Dans le second mode de réalisation de l'invention, comme on peut le voir à la figure 5a, une face arrière 118 intérieure du joint 26 est disjointe de l'anneau 27, ce qui permet la circulation du fluide hydraulique.

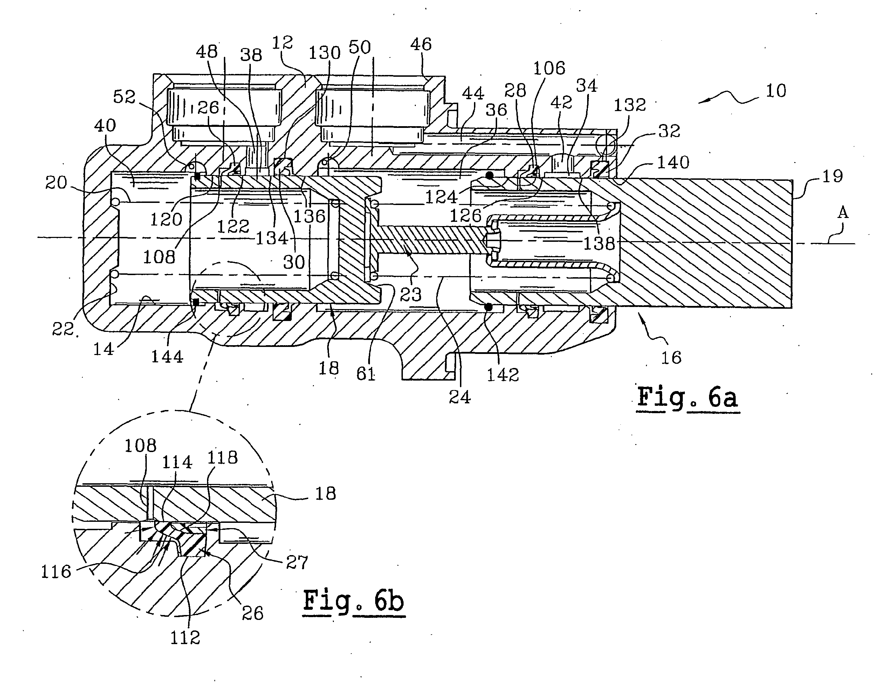

Les figures 2a et 6a représentent une position d'inhibition des moyens de communication.

Selon le premier mode de réalisation, comme l'illustre la figure 2a, l'avancée du piston primaire 16 a provoqué l'obturation du conduit 90 associé au piston 16 en plaquant le joint annulaire 102 contre la face arrière 94 d'épaulement du tronçon avant 54 du piston 16. Ceci produit une légère montée en pression du fluide hydraulique de freinage dans la chambre avant 36 de pression, ce qui repousse le piston secondaire 18 et provoque l'obturation du conduit 92 associé au piston 18 en plaquant le joint annulaire 104 contre la face arrière 96 d'épaulement du tronçon avant 56 du piston 18.

Dans cette configuration, les faces avant des joints 28 et 26 sont soumises à une pression qui les plaque contre la périphérie des pistons respectifs 16 et 18. Les flèches de la figure 3b illustrent l'action des forces de pression sur la face avant 116 de la lèvre 114 du joint 26.

Selon le second mode de réalisation, comme l'illustre la figure 6a, l'avancée du piston primaire 16 a provoqué l'obturation du conduit 106 associé au piston 16, lequel conduit a avancé selon une position par rapport au joint avant 28 qui est opposée à celle qu'il occupait précédemment en position de repos du piston 16.

Ceci produit une légère montée en pression du fluide hydraulique de freinage dans la chambre 36 avant de pression, ce qui repousse le piston secondaire 18 et provoque l'obturation du conduit 108 associé au piston 18. Le conduit 108 associé au piston 18 avance à son tour jusqu'à une position par rapport au joint avant 26 qui est opposée à celle qu'il occupait précédemment en position de repos. Dans cette configuration, les faces avant des joints 28 et 26 sont soumises à une pression qui les plaque contre la périphérie des pistons respectifs 16 et 18.

La figure 6b illustre l'action des forces de pression, représentées par des flèches, sur la face avant 116 de la lèvre 114 du joint 26. Ces forces de pression plaquent la lèvre 116 du joint 26 contre le piston 18 et plaquent la face arrière 118 intérieure du joint 26 contre l'anneau 27, garantissant ainsi une bonne étanchéité.

Les figures 3a et 7a représentent une position d'application d'un effort de freinage par les pistons 16 et 18.

L'avancée des pistons primaires 16 et 18 a provoqué l'obturation des conduits 90, 92 associés au premier mode de réalisation et des conduits 106 108 associés au second mode de réalisation. Chacun de ces conduits a avancé selon une position par rapport au joint avant respectif 26, 28 qui est opposée à celle qu'il occupait précédemment en position de repos. Le fluide hydraulique de freinage est sous pression dans les deux chambres avant 36 et 40.

Dans cette configuration, les faces avant des joints 28 et 26 sont soumises à une pression qui les plaque contre la périphérie des pistons respectifs 16 et 18. Les flèches de la figure 3b illustrent l'action des forces de pression sur la face avant 116 de la lèvre 114 du joint 26 associé au premier mode de réalisation. La figure 7b illustre l'action des forces de pression, représentées par des flèches, sur la face avant 116 de la lèvre 114 du joint 26 associé au second mode de réalisation. Ces forces de pression plaquent la lèvre 116 du joint 26 contre le piston 18 et plaquent la face arrière 118 intérieure du joint 26 contre l'anneau 27, garantissant ainsi une bonne étanchéité.

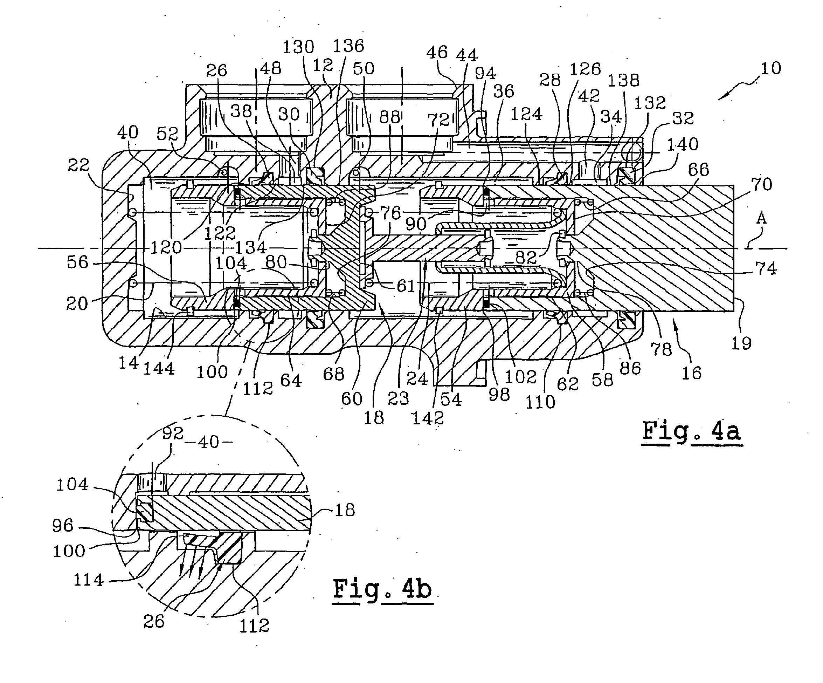

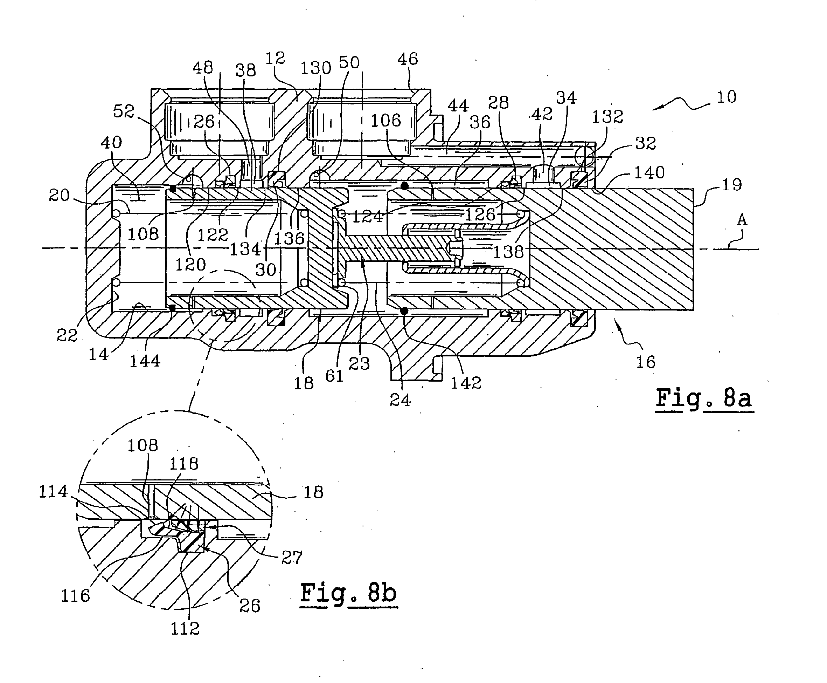

Les figures 4a et 8a représentent une position de réalimentation des chambres avant 36, 40 par les conduits radiaux 42, 48 et les réservoirs associés (non représentés) lorsque le conducteur relâche son effort sur l'extrémité 19 du piston primaire 16.

Dans cette configuration, les deux pistons 16 et 18 reculent rapidement et il se crée une dépression dans les chambres avant de pression primaire 36 et secondaire 40. Cette dépression soulève les lèvres des joints 26 et 28.

Comme on peut le voir par exemple aux figures 4b et 8b, les forces de dépression, représentées par des flèches, tendent à décoller la lèvre 114 du joint d'étanchéité 26 ce qui permet au fluide hydraulique de cheminer du conduit 48 vers la chambre avant de pression secondaire 40 en circulant entre l'alésage 14 et la périphérie du piston 18.

Dans le cas particulier du second mode de réalisation de l'invention, représenté à la figure 8b, les forces de dépression décollent la lèvre 116 du piston 18 et décollent la face arrière 118 intérieure du joint 26 de l'anneau 27, ce qui permet plus particulièrement au fluide hydraulique de cheminer du conduit 48 vers la chambre avant de pression secondaire 40 en circulant entre la face arrière 118 du joint 26 et l'anneau 27.

Dans les deux modes de réalisation de l'invention, comme l'illustrent les figures 1a à 9a, le corps 12 comporte de préférence une paire avant de portées annulaires 120, 122 qui sont agencées de part et d'autre du joint d'étanchéité avant 26 associé au piston 18, et une paire avant de portées annulaires 124, 126 qui sont agencées de part et d'autre du joint d'étanchéité avant 28 associé au piston 16.

Ces portées 120, 122, 124, 126 permettent le guidage des pistons 16, 18 dans l'alésage 14. Chacune de ces portées annulaires 120, 122, 124, 126 comporte au moins une rainure 128 de circulation du fluide hydraulique. Cette configuration permet de proposer un guidage précis du piston 16, 18 tout en permettant la réalimentation du conduit radial 42, 48 avec un débit satisfaisant.

L'anneau 27 permet avantageusement d'éviter l'extrusion du joint d'étanchéité avant 28 dans l'au moins une rainure 128.

De préférence, comme l'illustre plus précisément la figure 9b, les portées annulaires 120, 122 comportent une pluralité de rainures hélicoïdales 124.

Par ailleurs, comme l'illustrent les figures 1a à 8a, le moyen d'étanchéité arrière 30, 32 est constitué d'un joint d'étanchéité arrière 30, 32 qui est monté dans une gorge 130, 132 du corps 12 et dont une lèvre périphérique intérieure est agencée au contact du piston 16, 18 associé.

Par ailleurs, comme l'illustrent les figures 1a à 9a, le corps comporte une paire arrière de portées annulaires 134, 136 qui sont agencées de part et d'autre du joint d'étanchéité arrière 30 associé au piston 18 et une paire arrière de portées annulaires 138, 140 qui sont agencées de part et d'autre du joint d'étanchéité arrière 32 associé au piston 16. Ces portées 134, 136, 138, 140 permettent le guidage des pistons 16, 18 associés dans l'alésage 14.

Par ailleurs, dans chacun des modes de réalisation, les moyens de butée des pistons 16, 18 comportent à l'extrémité de chaque piston un anneau élastique extérieur 142, 144 qui est susceptible, dans la position de repos du piston 16, 18, de venir au contact d'une face d'épaulement avant de la portée annulaire 124, 120 avant qui fait partie de la paire avant de portées annulaires.

Les figures 12 à 14 illustrent trois étapes successives du montage dans le corps 12 de l'anneau 27 de renfort associé au joint d'étanchéité 26 du second mode de réalisation.

Pour le montage on utilise trois outils 150, 160 et 170.

L'outil 150 est tubulaire et comporte un tronçon avant 152 qui est sensiblement du diamètre de l'alésage 14, et un tronçon arrière 154 qui est sensiblement d'un diamètre égal au diamètre intérieur de l'anneau de renfort 27 comprimé. L'outil 150 comporte un chanfrein tronconique 156 à l'extrémité arrière de son tronçon avant 152. La longueur du tronçon avant 152 est prévue pour que l'extrémité arrière du tronçon avant 152 coïncide axialement sensiblement avec la gorge 112.

L'outil 160 est sensiblement tubulaire et comporte un tronçon avant 162 qui est sensiblement du diamètre moyen de l'anneau de renfort 27 comprimé. L'outil 160 comporte un chanfrein tronconique 166 à l'extrémité avant de son tronçon avant 162. Il comporte aussi un tronçon arrière 164 formant molette de préhensidn, d'un diamètre supérieur au tronçon avant 162.

L'outil 170 est sensiblement tubulaire et comporte un tronçon avant 172 qui est sensiblement d'un diamètre intérieur égal au diamètre extérieur de l'anneau de renfort 27 comprimé. Il comporte aussi un tronçon arrière 174 formant molette de préhension, d'un diamètre supérieur au tronçon avant 172.

L'anneau 27 est comprimé puis enfilé sur le tronçon arrière 154 de l'outil 150. Puis l'outil 160 est enfilé suivant une position axiale intermédiaire dans l'outil 170 et sur l'outil 150. L'ensemble des trois outils 150, 160, 170 et de l'anneau 27 est introduit dans l'alésage 14 du corps 12. L'anneau 27 alors est tenu axialement par l'extrémité du tronçon avant 162 de l'outil 160, et il est maintenu radialement par le tronçon avant 172 de l'outil 170, avec un jeu axial J entre l'anneau 27 et le tronçon avant 152 de l'outil 150, comme représenté à la figure 12.

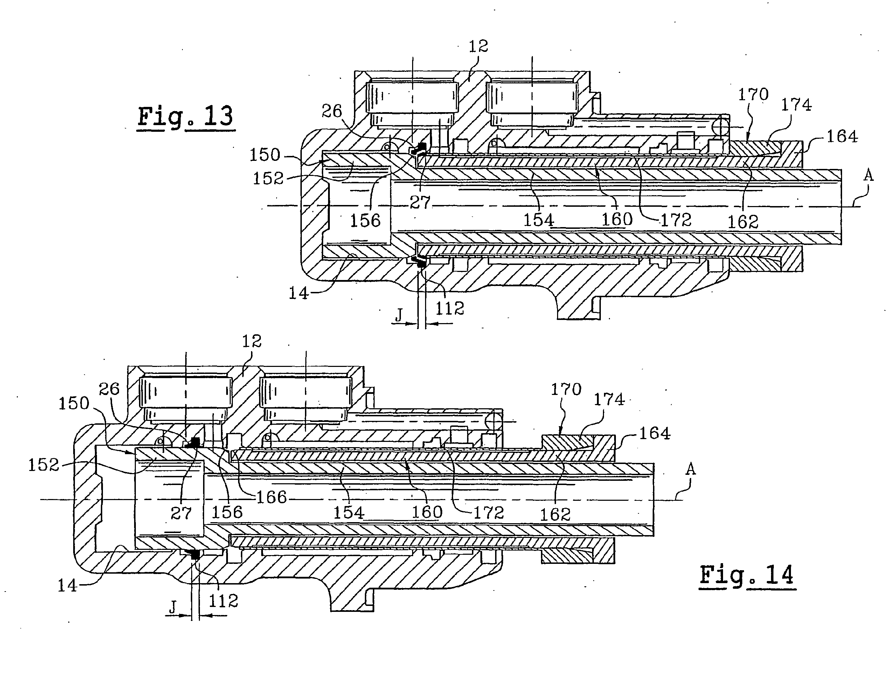

Puis, comme l'illustre la figure 13, l'outil 160 est repoussé vers l'avant de manière à réduire le jeu J. L'anneau 27 s'échappe alors du tronçon avant 172 et reprend spontanément sa forme en appui sur le chanfrein tronconique 166 de l'outil 160.

Enfin comme l'illustre la figure 14, l'ensemble des trois outils 150, 160, 170 est ôté de l'alésage 14 du corps 12, le chanfrein tronconique 156 agencé à l'extrémité arrière de son tronçon avant 152 permettant le passage de l'outil 150 sans destruction de l'anneau 27 de renfort.

L'invention permet donc de disposer d'un maître-cylindre muni d'une étanchéité d'une grande fiabilité.

## Revendications

1. Maître-cylindre (10) de freinage pour un véhicule automobile, du type qui comporte un corps (12) sensiblement axial à l'intérieur d'un alésage (14) duquel est monté coulissant au moins un piston axial (16, 18), qui est susceptible d'être actionné par un conducteur du véhicule entre une position arrière de repos et une position avant d'application d'un effort de freinage, et qui est rappelé élastiquement vers sa position arrière de repos à l'encontre d'une butée formée dans le corps (12), du type dans lequel l'alésage (14) comporte deux moyens d'étanchéité avant (26, 28) et arrière (30, 32) qui sont interposés entre le piston (16, 18) et l'alésage (14), le moyen d'étanchéité avant (26, 28) délimitant dans l'alésage (14) une chambre d'alimentation arrière (34, 38) et une chambre de pression avant (36, 40), du type dans lequel le corps (12) comporte un conduit radial (42, 48) d'alimentation qui relie un réservoir extérieur de fluide hydraulique à la chambre d'alimentation arrière (34, 38) et qui débouche entre les deux moyens d'étanchéité (26, 28, 30, 32) du type dans lequel le corps (12) comporte un perçage (50, 52) d'alimentation d'un circuit de freinage qui débouche dans la chambre de pression avant (36, 40), du type qui comporte des moyens de mise en communication de la chambre de pression avant (36, 40) et de la chambre d'alimentation arrière (34, 38) qui sont susceptibles d'être inhibés par le piston (16, 18) lorsqu'il est mû axialement vers l'avant vers sa position d'application pour isoler la chambre de pression avant (36, 40) de la chambre d'alimentation arrière (34, 38) et permettre ainsi l'établissement d'une pression de freinage dans la chambre de pression avant (36, 40),
**caractérisé en ce que** le moyen d'étanchéité avant (26, 28) comporte un joint d'étanchéité avant (26, 28) qui est monté dans une gorge (110, 112) du corps (12) et dont une lèvre périphérique intérieure, agencée au contact du piston (16, 18), est susceptible de se soulever du piston (16, 18) lorsqu'il revient de sa position d'application vers sa position de repos pour permettre au fluide hydraulique, en circulant entre l'alésage (14) et le piston (16, 18) de ré-alimenter la chambre de pression avant (36, 40) à partir du conduit radial (42, 48) d'alimentation et du réservoir et que le corps (12) comporte une paire avant de portées annulaires (120, 122, 124, 126) qui sont agencées de part et d'autre du joint d'étanchéité avant (26, 28) pour permettre le guidage du piston (16, 18) dans l'alésage (14) et qui comportent une pluralité de rainures (128) hélicoïdales, de circulation du fluide hydraulique.

2. Maître-cylindre (10) selon la revendication 1, **caractérisé en ce que** le piston (16, 18) est monobloc, notamment tubulaire, et comporte au moins un conduit (106, 108) dont une première extrémité débouche dans la chambre de pression avant (36, 40) et dont une seconde extrémité débouche dans la périphérie du piston (16, 18) de manière communiquer avec la chambre d'alimentation (34, 38) en position de repos du piston (16, 18) pour former les moyens de communication et de manière à communiquer avec la chambre de pression avant (36, 40) en position d'application du piston (16, 18) pour inhiber les moyens de communication.

3. Maître-cylindre (10) selon la revendication précédente, **caractérisé en ce que** le joint (26, 28) comporte un anneau (27) de renfort intérieur qui est destiné à éviter l'extrusion du joint (26, 28).

4. Maître-cylindre (10) selon la revendication précédente, **caractérisé en ce que** l'anneau (27) est réalisé en un matériau sensiblement élastique, et **en ce qu'**il comporte une portée (29) tronconique et une fente axiale (31) agencée sur sa périphérie (33) qui sont destinées à faciliter son montage.

5. Maître cylindre selon la revendication précédente, **caractérisé en ce que** l'anneau (27) comporte au moins une fente axiale agencée sur la face intérieure (37) de sa périphérie (33).

6. Maître-cylindre (10) selon l'une des revendications 3 à 5, **caractérisé en ce que** l'anneau (27) est réalisé en un matériau élastomère.

7. Maître-cylindre (10) selon la revendication 1, **caractérisé en ce que** le piston (16, 18) comporte un tronçon avant (54, 56) et un tronçon arrière (58, 60) tubulaires de même diamètre (D) extérieur, une portée arrière (62, 64) du tronçon avant (54, 56) coulissant dans un alésage (66, 68) du tronçon arrière (58, 60), et **en ce que** des moyens de retenue (78, 80, 82, 84) et des moyens de sollicitation élastique (86, 88) sont interposés entre une face arrière (70, 72) du tronçon avant (54, 56) et le fond (74, 76) de l'alésage (66, 68) du tronçon arrière (58, 60).

8. Maître-cylindre (10) selon la revendication précédente, **caractérisé en ce que** le tronçon avant (54, 56) comporte au moins un conduit (90, 92) dont une première extrémité débouche dans la chambre de pression avant (36, 40) et dont une seconde extrémité débouche dans la périphérie de la portée arrière (62, 64) entre une face arrière (94, 96) d'épaulement du tronçon avant (54, 56) et une face avant (98, 100) d'épaulement du tronçon arrière (58, 60) pour former un clapet mobile qui, en position de repos du piston (16, 18) débouche dans la chambre d'alimentation (34, 38) et constitue les moyens de communication.

9. Maître-cylindre (10) selon la revendication précédente, **caractérisé en ce que** la face avant (98, 100) d'épaulement du tronçon arrière comporte un joint annulaire (102, 104).

10. Maître-cylindre (10) selon l'une quelconque des revendications précédentes, **caractérisé en ce que** le moyen d'étanchéité arrière (30, 32) est constitué d'un joint d'étanchéité (30, 32) arrière qui est monté dans une gorge (130, 132) du corps (12) et dont une lèvre périphérique intérieure est agencée au contact du piston (16, 18).

11. Maître-cylindre (10) de freinage selon la revendication précédente, **caractérisé en ce que** le corps (12) comporte une paire arrière de portées annulaires (134, 136, 138, 140) qui sont agencées de part et d'autre du joint d'étanchéité arrière (30, 32) pour permettre le guidage du piston (16, 18) dans l'alésage (14).

12. Maître-cylindre (10) selon l'une quelconque des revendications 1 à 11, **caractérisé en ce que** le piston (16, 18) comporte à son extrémité un anneau élastique extérieur (142, 144) qui est susceptible, dans la position de repos du piston (16, 18), de venir au contact d'une face d'épaulement avant de la portée annulaire avant (120, 124) de la paire avant de portées annulaires formant butée.

13. Maître-cylindre (10) selon l'une quelconque des revendications précédentes, **caractérisé en ce que** le piston (16, 18) est rappelé élastiquement vers sa position arrière de repos par un ressort (20, 24).

14. Maître-cylindre (10) selon l'une quelconque des revendications précédentes, **caractérisé en ce qu'**il est un maitre-cylindre de type "tandem" qui comporte, d'arrière en avant, deux pistons primaire (16), 18) et secondaire qui délimitent dans l'alésage du corps des chambres d'alimentation primaire (34) et secondaire (38) et des chambres de pression primaire (36) et secondaire (40), le piston primaire (16) étant rappelé élastiquement vers sa position arrière de repos par l'intermédiaire d'un ressort (24) prenant appui entre une face arrière (61) du piston secondaire (18) et une face avant du piston primaire (16).

## Claims

1. Brake master cylinder (10) for a motor vehicle, of the type which comprises an essentially axial body (12) inside a bore (14) of which is slideably mounted at least one axial piston (16, 18) which is capable of being actuated by a driver of the vehicle between a rear position of rest and a forward position of application of a braking force, and which is returned elastically to its rear position of rest against a stop formed in the body (12), of the type in which the bore (14) comprises two sealing means, front (26, 28) and rear (30, 32), which are interposed between the piston (16, 18) and the bore (14), the front sealing means (26, 28) delimiting, in the bore (14), a rear supply chamber (34, 38) and a front pressure chamber (36, 40), of the type in which the body (12) comprises a radial supply duct (42, 48) which connects an external reservoir of hydraulic fluid to the rear supply chamber (34, 38) and which opens between the two sealing means (26, 28, 30, 32), of the type in which the body (12) has a drilling (50, 52) for supplying a braking circuit which opens into the front pressure chamber (36, 40), of the type which comprises means for placing the front pressure chamber (36, 40) and the rear supply chamber (34, 38) in communication, which means are capable of being inhibited by the piston (16, 18) when it is moved axially forward towards its position of application in order to isolate the front pressure chamber (36, 40) from the rear supply chamber (34, 38) and thus allow a braking pressure to become established in the front pressure chamber (36, 40),
**characterized in that** the front sealing means (26, 28) comprises a front seal (26, 28) which is mounted in a groove (110, 112) of the body (12), and of which an interior peripheral lip, arranged in contact with the piston (16, 18), is capable of lifting off the piston (16, 18) when it returns from its position of application to its position of rest so as to allow the hydraulic fluid, by flowing between the bore (14) and the piston (16, 18), to resupply the front pressure chamber (36, 40) from the radial supply duct (42, 48) and from the reservoir and **in that** the body (12) comprises a front pair of annular bearing surfaces (120, 122, 124, 126) which are arranged on each side of the front seal (26, 28) to guide the piston (16, 18) in the bore (14) and which comprise a number of helical channels (128) along which the hydraulic fluid can flow.

2. Master cylinder (10) according to claim 1, **characterized in that** the piston (16, 18) is one-piece, in particular, tubular, and has at least one duct (106, 108) a first end of which opens into the front pressure chamber (36, 40) and a second end of which opens into the periphery of the piston (16, 18) in such a way as to communicate with the supply chamber (34, 38) when the piston (16, 18) is in the position of rest so as to form the means of communication and so as to communicate with the front pressure chamber (36, 40) when the piston (16, 18) is in the position of application so as to inhibit the means of communication.

3. Master cylinder (10) according to the preceding claim, **characterized in that** the seal (26, 28) comprises an interior reinforcing ring (27) which is intended to prevent the seal (26, 28) from becoming extruded.

4. Master cylinder (10) according to the preceding claim, **characterized in that** the ring (27) is made of a fairly elastic material, **in that** it comprises a frustoconical bearing surface (29) and an axial slot (31) arranged on its periphery (33) and which are intended to make it easier to fit.

5. Master cylinder according to the preceding claim, **characterized in that** the ring (27) comprises at least one axial slot arranged on the interior face (37) of its periphery (33).

6. Master cylinder (10) according to one of Claims 3 to 5, **characterized in that** the ring (27) is made of an elastomeric material.

7. Master cylinder (10) according to Claim 1, **characterized in that** the piston (16, 18) comprises a front portion (54, 56) and a rear portion (58, 60) which are tubular and of the same outside diameter (D), a rear bearing surface (62, 64) of the front portion (54, 56) sliding in a bore (66, 68) of the rear portion (58, 60), and **in that** retaining means (78, 80, 82, 84) and elastic urging means (86, 88) are interposed between a rear face (70, 72) of the front portion (54, 56) and the closed end (74, 76) of the bore (66, 68) of the rear portion (58, 60).

8. Master cylinder (10) according to the preceding claim, **characterized in that** the front portion (54, 56) comprises at least one duct (90, 92) a first end of which opens into the front pressure chamber (36, 40) and a second end of which opens into the periphery of the rear bearing surface (62, 64) between a shoulder rear face (94, 96) of the front portion (54, 56) and a shoulder front face (98, 100) of the rear portion (58, 60) to form a moving valve which, when the piston (16, 18) is in the position of rest, opens into the supply chamber (34, 38) and constitutes the means of communication.

9. Master cylinder (10) according to the preceding claim, **characterized in that** the shoulder front face (98, 100) of the rear portion has an annular seal (102, 104).

10. Master cylinder (10) according to any one of the preceding claims, **characterized in that** the rear sealing means (30, 32) consists of a rear seal (30, 32) which is mounted in a groove (130, 132) of the body (12) and of which an interior peripheral lip is arranged in contact with the piston (16, 18).

11. Brake master cylinder (10) according to the preceding claim, **characterized in that** the body (12) comprises a rear pair of annular bearing surfaces (134, 136, 138, 140) which are arranged one on each side of the rear seal (30, 32) to guide the piston (16, 18) in the bore (14).

12. Master cylinder (10) according to any one of Claims 1 to 11, **characterized in that** the piston (16, 18) at its end comprises an external elastic ring (142, 144) which is capable, when the piston (16, 18) is in the position of rest, of coming into contact with a front shoulder face of the front annular bearing surface (120, 124) of the front pair of annular bearing surfaces forming a stop.

13. Master cylinder (10) according to any one of the preceding claims, **characterized in that** the piston (16, 18) is elastically returned to its rear position of rest by a spring (20, 24).

14. Master cylinder (10) according to any one of the preceding claims, **characterized in that** it is a master cylinder of the "tandem" type which comprises, from the rear forward, two pistons primary (16), (18) and secondary, which delimit in the bore of the body primary (34) and secondary (38) supply chambers and primary (36) and secondary (40) pressure chambers, the primary piston (16) being returned elastically to its rear position of rest by a spring (24) bearing between a rear face (61) of the secondary piston (18) and a front face of the primary piston (16).

## Patentansprüche

1. Hauptbremszylinder (10) für ein Kraftfahrzeug, vom Typ mit einem im Wesentlichen axialen Körper (12) mit einer Bohrung (14), in der mindestens ein axialer Kolben (16, 18) gleitend angebracht ist, der von einem Fahrer des Fahrzeugs zwischen einer hinteren Ruhestellung und einer vorderen Stellung zum Aufbringen einer Bremskraft betätigt werden kann und gegen einen im Körper (12) ausgebildeten Anschlag elastisch in seine hintere Ruhestellung zurückgestellt wird, vom Typ, bei dem die Bohrung (14) ein vorderes Dichtmittel (26, 28) und ein hinteres Dichtmittel (30, 32) aufweist, die zwischen dem Kolben (16, 18) und der Bohrung (14) angeordnet sind, wobei das vordere Dichtmittel (26, 28) in der Bohrung (14) eine hintere Versorgungskammer (34, 38) und eine vordere Druckkammer (36, 40) begrenzt, vom Typ, bei dem der Körper (12) eine radiale Versorgungsleitung (42, 48) aufweist, die einen äußeren Hydraulikfluidbehälter mit der hinteren Versorgungskammer (34, 38) verbindet und zwischen den beiden Dichtmitteln (26, 28, 30, 32) mündet, vom Typ, bei dem der Körper (12) eine Durchbrechung (50, 52) zur Versorgung eines Bremskreises aufweist, die in die vordere Druckkammer (36, 40) mündet, vom Typ, der Mittel zur Verbindung der vorderen Druckkammer (36, 40) mit der hinteren Versorgungskammer (34, 38) aufweist, die von dem Kolben (16, 18) blockiert werden können, wenn er axial nach vorne in seine Stellung zum Aufbringen bewegt wird, um die vordere Druckkammer (36, 40) von der hinteren Versorgungskammer (34, 38) zu trennen und somit den Aufbau eines Bremsdrucks in der vorderen Druckkammer (36, 40) zu gestatten,
**dadurch gekennzeichnet, dass** das vordere Dichtmittel (26, 28) eine vordere Dichtung (26, 28) umfasst, die in einer Nut (110, 112) des Körpers (12) angebracht ist und bei der sich eine Innenumfangslippe, die so angebracht ist, dass sie den Kolben (16, 18) berührt, vom Kolben (16, 18) abheben kann, wenn er von seiner Stellung zum Aufbringen in seine Ruhestellung gelangt, damit das Hydraulikfluid bei der Zirkulation zwischen der Bohrung (14) und dem Kolben (16, 18) die vordere Druckkammer (36, 40) ausgehend von der radialen Versorgungsleitung (42, 48) und dem Behälter erneut speisen kann, und der Körper (12) zwei vordere ringförmige Auflageflächen (120, 122, 124, 126) aufweist, die auf der einen und der anderen Seite der vorderen Dichtung (26, 28) angeordnet sind, um die Führung des Kolbens (16, 18) in der Bohrung (14) zu ermöglichen, und die mehrere spiralförmige Rillen (128) zur Zirkulation des Hydraulikfluids aufweisen.

2. Hauptzylinder (10) nach Anspruch 1, **dadurch gekennzeichnet, dass** der Kolben (16, 18) einstückig und insbesondere rohrförmig ist und mindestens eine Leitung (106, 108) aufweist, bei der ein erstes Ende in die vordere Druckkammer (36, 40) mündet und ein zweites Ende im Umfang des Kolbens (16, 18) mündet, so dass sie in der Ruhestellung (16, 18) mit der Versorgungskammer (34, 38) kommuniziert und die Verbindungsmittel gebildet sind und in der Stellung zum Aufbringen des Kolbens (16, 18) mit der vorderen Druckkammer (36, 40) kommuniziert und die Verbindungsmittel blockiert sind.

3. Hauptzylinder (10) nach dem vorhergehenden Anspruch, **dadurch gekennzeichnet, dass** die Dichtung (26, 28) einen inneren Verstärkungsring (27) aufweist, der dazu vorgesehen ist, das Herausziehen der Dichtung (26, 28) zu verhindern.

4. Hauptzylinder (10) nach dem vorhergehenden Anspruch, **dadurch gekennzeichnet, dass** der Ring (27) aus einem im Wesentlichen elastischen Material hergestellt ist und eine kegelstumpfartige Auflagefläche (29) und einen an seinem Umfang (33) angeordneten axialen Spalt (31) aufweist, die dazu vorgesehen sind, seine Montage zu vereinfachen.

5. Hauptzylinder nach dem vorhergehenden Anspruch, **dadurch gekennzeichnet, dass** der Ring (27) mindestens einen axialen Spalt aufweist, der an der Innenfläche (37) seines Umfangs (33) ausgebildet ist.

6. Hauptzylinder (10) nach einem der Ansprüche 3 bis 5, **dadurch gekennzeichnet, dass** der Ring (27) aus einem Elastomermaterial besteht.

7. Hauptzylinder (10) nach Anspruch 1, **dadurch gekennzeichnet, dass** der Kolben (16, 18) einen vorderen rohrförmigen Abschnitt (54, 56) und einen hinteren rohrförmigen Abschnitt (58, 60) mit dem gleichen Außendurchmesser (D) aufweist, wobei eine hintere Auflagefläche (62, 64) des vorderen Abschnitts (54, 56) in einer Bohrung (66, 68) des hinteren Abschnitts (58, 60) gleitet, und dass zwischen einer hinteren Fläche (70, 72) des vorderen Abschnitts (54, 56) und dem Boden (74, 76) der Bohrung (66, 68) des hinteren Abschnitts (58, 60) Haltemittel (78, 80, 82, 84) und Mittel zur elastischen Beaufschlagung (86, 88) angeordnet sind.

8. Hauptzylinder (10) nach dem vorhergehenden Anspruch, **dadurch gekennzeichnet, dass** der vordere Abschnitt (54, 56) mindestens eine Leitung (90, 92) aufweist, bei der ein erstes Ende in die vordere Druckkammer (36, 40) mündet und ein zweites Ende zwischen einer hinteren Absatzfläche (94, 96) des vorderen Abschnitts (54, 56) und einer vorderen Absatzfläche (98, 100) des hinteren Abschnitts (58, 60) in den Umfang der hinteren Auflagefläche (62, 64) mündet, so dass ein bewegliches Ventilelement gebildet ist, das in der Ruhestellung des Kolbens (16, 18) in die Versorgungskammer (34, 38) mündet und die Verbindungsmittel bildet.

9. Hauptzylinder (10) nach dem vorhergehenden Anspruch, **dadurch gekennzeichnet, dass** die vordere Absatzfläche (98, 100) des hinteren Abschnitts eine ringförmige Dichtung (102, 104) aufweist.

10. Hauptzylinder (10) nach einem der vorhergehenden Ansprüche, **dadurch gekennzeichnet, dass** das hintere Dichtmittel (30, 32) aus einer hinteren Dichtung (30, 32) besteht, die in einer Nut (130, 132) des Körpers (12) angebracht ist und bei der eine Innenumfangslippe so angeordnet ist, dass sie den Kolben (16, 18) berührt.

11. Hauptbremszylinder (10) nach dem vorhergehenden Anspruch, **dadurch gekennzeichnet, dass** der Körper (12) zwei hintere ringförmige Auflageflächen (134, 136, 138, 140) aufweist, die auf der einen und der anderen Seite der hinteren Dichtung (30, 32) angeordnet sind, um die Führung des Kolbens (16, 18) in der Bohrung (14) zu ermöglichen.

12. Hauptzylinder (10) nach einem der Ansprüche 1 bis 11, **dadurch gekennzeichnet, dass** der Kolben (16, 18) an seinem Ende einen elastischen Außenring (142, 144) aufweist, der in der Ruhestellung des Kolbens (16, 18) mit einer einen Anschlag bildenden vorderen Absatzfläche der vorderen ringförmigen Auflagefläche (120, 124) des vorderen Paars ringförmiger Auflageflächen in Kontakt gelangen kann.

13. Hauptzylinder (10) nach einem der vorhergehenden Ansprüche, **dadurch gekennzeichnet, dass** der Kolben (16, 18) von einer Feder (20, 24) elastisch in seine hintere Ruhestellung zurückgestellt wird.

14. Hauptzylinder (10) nach einem der vorhergehenden Ansprüche, **dadurch gekennzeichnet, dass** er ein "Tandem"-Hauptzylinder ist, der von hinten nach vorne einen Primär- und einen Sekundärkolben (16, 18) aufweist, die in der Bohrung des Körpers eine primäre Versorgungskammer (34) und eine sekundäre Versorgungskammer (38) und eine primäre Druckkammer (36) und eine sekundäre Druckkammer (40) begrenzen, wobei der Primärkolben (16) über eine Feder (24), die sich zwischen einer hinteren Fläche (61) des Sekundärkolbens (18) und einer vorderen Fläche des Primärkolbens (16) abstützt, elastisch in seine hintere Ruhestellung zurückgestellt wird.
